# EUROPÄISCHE PATENTSCHRIFT

(11) **EP 3 881 664 B1**
(45) Veröffentlichungstag und Bekanntmachung des Hinweises auf die Patenterteilung: **19.10.2022**
(21) Anmeldenummer: 20204705.6
(22) Anmeldetag: 29.10.2020
(51) Int. Cl.: A01D 34/17, A01D 34/135

(54) **MÄHMESSERVORRICHTUNG**
MOWER BLADE DEVICE
DISPOSITIF À LAMES DE FAUCHAGE

(30) Priorität: 16.03.2020 CH 3142020
(43) Veröffentlichungstag der Anmeldung: 22.09.2021
(73) Patentinhaber: Wepfer Technics AG, 8450 Andelfingen (CH)
(72) Erfinder: Wepfer, Hans, 8471 Berg-Dägerlen (CH)
(74) Vertreter: Keller Schneider Patent- und Markenanwälte AG

(56) Entgegenhaltungen:
- AT-B- 398 020
- DE-A1- 1 582 418
- DE-A1- 10 246 558
- DE-B- 1 290 757
- DE-C- 380 537
- DE-C- 856 967
- FR-A- 771 266
- JP-U- S4 913
- US-A- 708 147

## Beschreibung

### Technisches Gebiet

Die Erfindung betrifft eine Mähmesservorrichtung mit einem Messerbalken und einem Doppelmesser-Schneidsystem, wobei das Doppelmesser-Schneidsystem ein oberes Schneidmesser und ein unteres Schneidmesser umfasst, welche relativ zueinander bewegbar ausgebildet sind, wobei das obere Schneidmesser mittels einer oberen Haltevorrichtung und das untere Schneidmesser mittels einer unteren Haltevorrichtung mit dem Messerbalken verbunden ausgebildet sind.

Mähmesservorrichtungen sind im Stand der Technik hinlänglich bekannt. Mähmesservorrichtungen werden auch Schneidwerke genannt und werden insbesondere bei Mähmaschinen, wie beispielsweise Mähdrescher oder Mähtraktoren, eingesetzt. Vorzugsweise umfassen derartige Mähmesservorrichtungen zwei gegeneinander hin- und herbewegbare aufeinanderliegende Messerschienen, welche jeweils eine Vielzahl von Klingenelementen aufweisen. Um den Verschleiß der Schneidmesser zu reduzieren, ist es einerseits vorteilhaft, die beiden aufeinanderliegenden Messerschienen aufeinander zu drücken, damit möglichst keine Verunreinigungen wie Steine oder dergleichen zwischen die Messerschienen gelangen können. Andererseits sollte der Druck zwischen den aufeinanderliegenden Messerschienen nicht zu groß sein, damit sich die Messerschienen gegenseitig nicht zu stark verschleißen.

### Stand der Technik

Beispielsweise ist aus der Druckschrift DE271 1352A1 eine Mähmesserandrückeinrichtung mit einem an einen Fingerbalken anzuliegendem Unterteil und einen auf diesen aufgesetzten schwenkbaren Oberteil bekannt. Die Schwenkachse ist parallel zum Messerandrückteil des nach unten abgebogenen Oberteiles angeordnet. In einem vom Messerandrückteil abgewandten Bereich des Oberteiles ist mindestens eine Druckschraube zum Einstellen des Anpressdruckes des Messerandrückteiles vorhanden, und die Schwenkachse liegt näher bei der Hinterkante als beim Messerandrückteil. Dadurch gelingt es, eine Mähmesserandrückeinrichtung zu schaffen, die eine niedrige Bauhöhe hat, sich leicht an unterschiedlich ausgebildete Fingerbalken und Messer unterschiedlicher Bauhöhe und Abnützung anpassen lässt. Ausserdem lässt sie sich leicht reinigen und preisgünstig herstellen.

Die Druckschrift DE598983A offenbart ein Schneidwerk mit zwei Führungsbalken. Zwischen den Führungsbalken werden in der Spannung regelbare Federn angeordnet. Die obere Messerschiene nebst ihren Messern wird dadurch nicht nur vom Gewicht ihres Führungsbalkens entlastet, sondern sie kann mit dem Führungsbalken jederzeit, der Abnutzung entsprechend, nachgestellt werden. Die oberen Messer sind an der rechteckigen Schiene befestigt, die in eine Nut des Führungsbalkens eingreift. Die unteren Messer sind an einer rechteckigen Schiene befestigt, welche in eine Nut des unteren Führungsbalkens geführt ist. Die beiden Messerschienen werden mit den an ihnen befestigten Messerreihen in bekannter Weise gegenläufig hin und her bewegt. Am hinteren Rand sind die Führungsbalken in bekannter Weise durch mehrere Gelenke verbunden, so dass der obere Führungsbalken zum Reinigen des Schneidwerks und zum Herausnehmen der Messerschienen mit den Messern aufgeklappt werden kann. Hinter den Messerschienen sind die Balken auf den einander zugekehrten Seiten mit je einer Ausnehmung versehen, in denen zwischen den beiden Balken eine Druckfeder oder ein anderer elastischer Körper eingelegt ist. Die Federn haben das Bestreben, den oberen Führungsbalken von dem unteren Führungsbalken abzuheben. Das Gewicht des oberen Führungsbalkens wird daher durch die Federn annähernd ausgeglichen.

Des weiteren offenbart die Druckschrift DE10246558A1 alle technischen Merkmale des Oberbegriffs im unabhängigen Vorrichtungsanspruch 1.

Nachteilig im Stand der Technik ist, dass der Verschleiß der bekannten Mähmesservorrichtungen und die sich daraus ergebenden Instandhaltungskosten sehr hoch sind.

### Darstellung der Erfindung

Aufgabe der Erfindung ist es, eine dem eingangs genannten technischen Gebiet zugehörende Mähmesservorrichtung zu schaffen, welche die Nachteile aus dem Stand der Technik zumindest teilweise überwindet und den Verschleiß sowie die Instandhaltungskosten reduziert.

Die Lösung der Aufgabe ist durch die Merkmale des Anspruchs 1 definiert. Gemäss der Erfindung umfasst die Mähmesservorrichtung einen Messerbalken und ein Doppelmesser-Schneidsystem, wobei das Doppelmesser-Schneidsystem ein oberes Schneidmesser und ein unteres Schneidmesser umfasst, welche relativ zueinander bewegbar ausgebildet sind, wobei das obere Schneidmesser mittels einer oberen Haltevorrichtung und das untere Schneidmesser mittels einer unteren Haltevorrichtung mit dem Messerbalken verbunden ausgebildet sind. Die obere Haltevorrichtung ist mittels einer Führungsbuchse an dem Messerbalken gelagert und ist innerhalb der Führungsbuchse eine vorgespannte Zugfeder angeordnet. Die Zugkraft der Zugfeder ist dazu ausgebildet, über die obere Haltevorrichtung eine Anpresskraft des oberen Schneidmessers auf das untere Schneidmesser zu bewirken.

Durch den erfindungsgemäßen Gegenstand wird beispielsweise der technische Vorteil erreicht, dass die Zugfeder ausschliesslich auf Zug beansprucht wird. Dadurch wird die Anpresskraft des oberen Schneidmessers auf das untere Schneidmesser nicht durch eine Kippbewegung der Haltevorrichtung erzeugt, sondern durch eine reine Zugbewegung der Haltevorrichtung übertragen, wobei die Wirkrichtung der Anpresskraft parallel zur Längsrichtung der Führungsbuchse ausgebildet ist. Dadurch wird der Verschleiss der Schneidmesser deutlich reduziert, da die Anpresskraft gleichmässig verteilt wird. Zusätzlich bringt dies den Vorteil mit sich, dass ein Wechsel des Schneidmessers mit geringerem Aufwand möglich ist, da eine Demontage der Haltevorrichtung nur wenig Aufwand erzeugt.

Ein weiterer bedeutender Vorteil der erfindungsgemässen Vorrichtung liegt in der mechanischen Belastung der Mähmesser im Betrieb begründet. Häufig wird das obere Schneidmesser durch Steine nach oben weggedrückt oder durch Verunreinigungen zwischen dem oberen Schneidmesser und dem unteren Schneidmesser stark deformiert. Diese Deformationen belasten die Schneidmesser zusätzlich und erhöhen den Verschleiss. Aufgrund der in der Führungsbuchse gelagerten Feder, kann die Haltevorrichtung der Anpresskraft entgegengerichtet nachgeben, wodurch die Verunreinigungen selbstständig entfernt werden und keinen dauerhaften Verschleiss an den Schneidmessern bewirken können. Dies verlängert die Nutzungszeit der Mähmesservorrichtung, da der Verschleiss zusätzlich reduziert wird.

Nach einer bevorzugten Ausführungsform ist die Führungsbuchse in einer Gewindebuchse gehalten. Dadurch wird beispielsweise der technische Vorteil erreicht, dass die Führungsbuchse gegen Verunreinigungen geschützt angeordnet werden kann und eine geeignete Krafteinleitung von der Haltevorrichtung über die Führungsbuchse auf die Gewindebuchse erfolgen kann.

Gemäss einer weiteren Ausführungsform ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändert werden. Dies kann beispielsweise nach einem Schneidmesserwechsel zur präzisen Einstellung der Mähmesservorrichtung vorteilhaft sein.

Um den Verschleiss im Betrieb der Mähmesservorrichtung weiter zu reduzieren und um die Einsatzdauer der erfindungsgemässen Vorrichtung zu steigern, ist die Führungsbuchse über ein Lager in der Gewindebuchse gehalten. Das Lager kann beispielsweise zwei verschiedene Lagerfunktionen beinhalten, die im Betrieb der Mähmesservorrichtung auftreten. Dies betrifft einerseits eine rotatorische Komponente, welche aufgrund der Bewegung des oberen und des unteren Schneidmessers zueinander erzeugt wird. Diese rotatorische Belastung lässt sich beispielsweise durch den Einsatz eines ringförmigen Wälzlagers aufnehmen. Andererseits wird das Lager auch in Längsrichtung der Führungsbuchse beansprucht, weshalb das Anordnen eines Gleitlagers vorteilhaft sein kann. Ideal ist ein Lager, welches sowohl die rotatorische Belastung als auch die Belastung in Längsrichtung der Führungsbuchse aufnehmen kann.

Nach einer vorteilhaften Ausführungsform ist das Lager an einer Oberseite und einer Unterseite der Gewindebuchse ausgebildet. Dadurch wird einer optimalen Lagerung der Führungsbuchse in der Gewindebuchse Rechnung getragen, wodurch der Verschleiss zusätzlich minimiert und somit die Lebensdauer der Mähmesservorrichtung insgesamt gesteigert werden kann.

Gemäss einer weiteren vorteilhaften Ausführungsform ist die Zugfeder mittels einer Federschraube spannbar ausgebildet. Dadurch wird beispielsweise der technische Vorteil erreicht, dass die Spannung und somit die Zugkraft der Feder einstellbar ausgebildet ist. Insbesondere lässt sich die Spannung je nach Bedarf durch Betätigung der Federschraube erhöhen oder reduzieren. Beispielsweise kann dies nach einem Wechsel der Mähmesser vorteilhaft sein, um die optimale Einstellung der Mähmesservorrichtung sicherzustellen. Zudem ist es möglich, die Spannung der Zugfeder und damit die Anpresskraft des oberen Schneidmessers auf das untere Schneidmesser für einen bestimmten Einsatzzweck zu variieren.

Um die Anpresskraft des oberen Schneidmessers auf das untere Schneidmesser zu verändern, ist die Federschraube über einen Buchsendeckel von außen einstellbar ausgebildet. Der Buchsendeckel ist besonders einfach zu betätigen. Ein spezielles Werkzeug ist nicht zwingend notwendig. Beispielsweise kann der Buchsendeckel manuell oder mittels eines einfachen handelsüblichen Werkzeugs betätigt werden. Insbesondere sind ein Schraubenzieher, ein Inbusschlüssel, ein Ring- oder Maulschlüssel hierfür geeignet.

In einer weiterführenden Ausführungsform weist der Buchsendeckel gegenüber der Gewindebuchse einen radialen Überstand auf. Dies ist eine konstruktiv besonders einfache Lösung. Es können größtenteils Standardbauteile eingesetzt werden, wobei auch Reparaturen oder Inspektionen leicht zu bewerkstelligen sind.

Nach einer zusätzlichen Ausführungsform weist die obere Haltevorrichtung eine Kröpfung auf, welche zwischen Führungsbuchse und oberem Schneidmesser angeordnet ist. Die Kröpfung an der oberen Haltevorrichtung sorgt für eine optimale räumliche Anordnung des oberen Schneidmessers relativ zum unteren Schneidmesser. Insbesondere kompensiert die Kröpfung die räumliche Ausdehnung der Federschraube, welche durch die Orientierung der Führungsbuchse orthogonal zum Messerbalken angeordnet ist. Somit ist es nicht notwendig, dass die obere Haltvorrichtung eine eigene Elastizität aufweist. Stattdessen kann die obere Haltevorrichtung als steifes Bauteil ausgebildet sein, welches die axiale Zugkraft der Federschraube unmittelbar auf das obere Schneidmesser überträgt.

Gemäß einer zusätzlichen Ausführungsform ist das obere Schneidmesser in einem Schneidmesserlager der oberen Haltevorrichtung geführt. Das Schneidmesserlager ermöglicht einen verschleissreduzierten Betrieb der Mähmesservorrichtung und erhöht die Einsatzdauer der erfindungsgemässen Vorrichtung.

Das Schneidmesserlager kann beispielsweise zwei verschiedene Lagerfunktionen beinhalten, die im Betrieb der Mähmesservorrichtung auftreten. Dies betrifft einerseits eine rotatorische Komponente, welche aufgrund der Bewegung des oberen und des unteren Schneidmessers zueinander erzeugt wird. Diese rotatorische Belastung lässt sich beispielsweise durch den Einsatz eines ringförmigen Wälzlagers aufnehmen. Andererseits wird das Schneidmesserlager durch die Anpresskraft der oberen Haltevorrichtung auf die untere Haltevorrichtung auch in Längsrichtung beansprucht. Zudem wird das Schneidmesserlager durch Steinschlag oder Schnittgut belastet. Ideal ist ein Lager, welches sowohl die rotatorische Belastung als auch die Belastung in Längsrichtung aufnehmen kann.

Um gegenüber der oberen Haltevorrichtung ein Widerlager zu bilden, welches die Anpresskraft aufnehmen kann, ist die untere Haltevorrichtung mittels einer Führungsbuchse an dem Messerbalken gelagert. Im Gegensatz zur oberen Haltevorrichtung ist die untere Haltevorrichtung in Richtung der Zugfeder unnachgiebig zum Messerbalken ausgebildet. Somit ist sichergestellt, dass das obere Schneidmesser und das untere Schneidmesser optimal aneinander anliegen können und die Anpresskraft des oberen Schneidmessers auf das untere Schneidmesser sichergestellt ist.

Nach einer bevorzugten Ausführungsform ist die Führungsbuchse in einer Gewindebuchse gehalten. Dadurch kann beispielsweise der technische Vorteil erreicht werden, dass die Führungsbuchse gegen Verunreinigungen geschützt angeordnet werden kann und eine geeignete Krafteinleitung von der unteren Haltevorrichtung über die Führungsbuchse auf die Gewindebuchse erfolgen kann.

Um die untere Haltevorrichtung möglichst einfach zu montieren oder zu wechseln, ist die Gewindebuchse über ein Aussengewinde mit dem Messerbalken verschraubbar ausgebildet. Dadurch wird der zusätzliche Vorteil erreicht, dass die Gewindebuchse eine zuverlässige Krafteinleitung in den Messerbalken sicherstellt. Des Weiteren ist es möglich, die Gewindebuchse ohne gesteigerten Montageaufwand zu demontieren oder zu wechseln. Zusätzlich kann mittels des Gewindes die absolute Position der Gewindebuchse relativ zum Messerbalken verändern werden. Dies kann beispielsweise nach einem Schneidmesserwechsel zur präzisen Einstellung der Mähmesservorrichtung in Abstimmung mit der oberen Haltevorrichtung vorteilhaft sein.

Gemäss einer besonders bevorzugten Ausführungsform ist die untere Haltevorrichtung mittels einer Schraube mit dem Messerbalken verschraubbar, wobei sich die Schraube vollständig durch die Führungsbuchse hindurch erstreckt. Dadurch wird beispielsweise der technische Vorteil erreicht, dass die Fixierung der unteren Haltevorrichtung mit dem Messerbalken besonders einfach zu realisieren ist. Durch das Hindurchführen der Schraube durch die vollständige Führungsbuchse hindurch, kann die Krafteinleitung besonders symmetrisch erfolgen. Zudem ist ein Lösen oder ggf. ein Wechsel der unteren Haltevorrichtung besonders einfach realisierbar.

Üblicherweise sind an einem Schneidmesser mehrere Klingenelemente seriell entlang des Messerbalkens angeordnet, wobei meist einem oberen Klingenelement ein unteres Klingenelement zugeordnet ist. Nach einer besonderen Ausführungsform, umfasst das obere Schneidmesser eine Vielzahl von Klingenelementen, wobei jedem dritten oberen Klingenelement eine obere Haltevorrichtung zugeordnet ist. Dadurch wird beispielsweise der technische Vorteil erreicht, dass eine kontinuierliche Kraftverteilung auf alle Klingenelemente entlang dem Messerbalken sichergestellt werden kann. Dadurch wird der Verschleiss reduziert und die Einsatzdauer der erfindungsgemässen Vorrichtung zusätzlich erhöht.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Mähmesservorrichtung aus dem Stand der Technik;
- Fig. 2: eine erfindungsgemässe Mähmesservorrichtung nach einer ersten Ausführungsform;
- Fig. 3: eine erfindungsgemässe Mähmesservorrichtung in einer Schnittansicht auf Höhe der oberen Haltevorrichtung nach einer beispielhaften Ausführungsform;
- Fig. 4: eine erfindungsgemässe Mähmesservorrichtung in einer Schnittansicht auf Höhe der unteren Haltevorrichtung nach einer beispielhaften Ausführungsform; und
- Fig. 5: einen Messerbalken einer erfindungsgemässen Mähmesservorrichtung nach einer beispielhaften Ausführungsform.

Grundsätzlich sind in den Figuren gleiche Teile mit gleichen Bezugszeichen versehen.

### Wege zur Ausführung der Erfindung

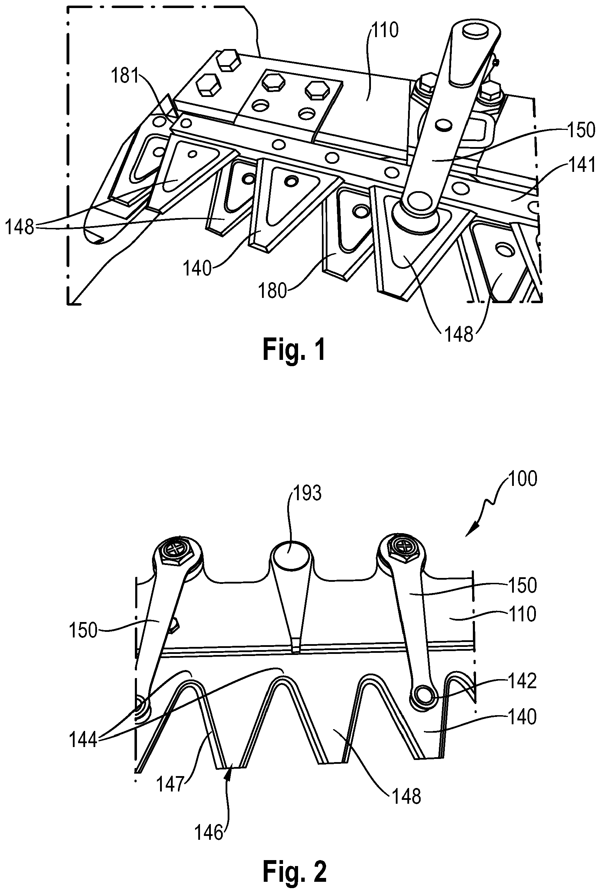

Die Figur 1 zeigt eine Mähmesservorrichtung aus dem Stand der Technik. Die Mähmesservorrichtung umfasst einen Messerbalken 110 mit einem Doppelmesser-Schneidsystem. Das Doppelmesser-Schneidsystem umfasst ein oberes Schneidmesser 140 und ein unteres Schneidmesser 180. Das obere Schneidmesser 140 umfasst mehrere Klingenelemente 148, die an einer oberen Schneidmesserschiene 141 fixiert sind. Das untere Schneidmesser 180 umfasst mehrere Klingenelemente 148, die an einer unteren Schneidmesserschiene 181 fixiert sind. Das obere Schneidmesser 140 und das untere Schneidmesser 180 sind relativ zueinander bewegbar ausgebildet. Die Klingenelemente 148 sind jeweils mit ihrer zugehörigen Schneidmesserschiene 141, 181 vernietet und somit einzeln austauschbar. Das obere Schneidmesser 140 ist mittels einer oberen Haltevorrichtung 150 mit dem Messerbalken 110 verbunden. Die obere Haltevorrichtung 150 verfügt über eine derart stark ausgeprägte Biegespannung, sodass eine Anpresskraft des oberen Schneidmessers 140 auf das untere Schneidmesser 180 erzeugt wird.

Die Figur 2 zeigt eine erfindungsgemässe Mähmesservorrichtung 100 nach einer ersten Ausführungsform. Die Mähmesservorrichtung 100 umfasst einen Messerbalken 110, welcher ein Doppelmesser-Schneidsystem trägt. Das Doppelmesser-Schneidsystem umfasst ein oberes Schneidmesser 140 und ein unteres Schneidmesser 180 (nicht gezeigt). Sowohl das obere Schneidmesser 140 als auch das untere Schneidemesser 180 verfügt jeweils über mehrere aneinander angeordnete Klingenelemente 148.

Im Betrieb sind das obere Schneidmesser 140 und das untere Schneidmesser 180 relativ zueinander bewegbar ausgebildet. Die Klingenelemente 148 des oberen Schneidmessers 140 sind einstückig mit einem oberen Messerrücken 144 verbunden, wodurch die Klingenelemente 148 und der obere Messerrücken 144 ein integrales Bauteil ausbilden. Analog verhält es sich mit den Klingenelementen 148 des unteren Schneidmessers 180. Die Klingenelemente 148 des unteren Schneidmessers 180 sind einstückig mit einem unteren Messerrücken 184 verbunden, wodurch die Klingenelemente 148 und der untere Messerrücken 184 ein integrales Bauteil ausbilden.

Die oberen Klingenelemente 148 mit dem oberen Messerrücken 144 und die unteren Klingenelemente 148 mit dem unteren Messerrücken 184 bilden gemeinsam das Doppelmesser-Schneidsystem aus, welches beispielsweise mittels eines einseitig ausgebildeten Kurbelwellenantriebs angetrieben werden kann.

Jedes der oberen Klingenelemente 148 verfügt über eine zur Vorderseite abgeflachte Schneidmesserspitze 146. Zudem hat jedes obere Klingenelement 148 eine V-förmige Ausgestaltung, wobei seitliche Schneidkanten 147 zum Schneiden des Schnittguts ausgebildet sind. Die Schneidkanten 147 zwischen zwei benachbarten Klingenelementen 148 sind über den oberen Messerrücken 144 hinweg durchgehend ausgebildet. Mit anderen Worten erstreckt sich die Schneidkante 147 kontinuierlich auch über den Übergang zwischen zwei benachbart angeordneten oberen Klingenelementen 148, wodurch die Schnittleistung der Mähmesservorrichtung 100 insgesamt verbessert wird.

Entsprechend umfasst jedes untere Klingenelement 148 eine zur Vorderseite abgeflachte Schneidmesserspitze 146. Zudem hat jedes untere Klingenelement 148 eine V-förmige Ausgestaltung, wobei seitliche Schneidkanten 147 zum Schneiden des Schnittguts ausgebildet sind. Die Schneidkanten 147 zwischen zwei benachbarten Klingenelementen 148 sind über den unteren Messerrücken 184 (nicht gezeigt) hinweg durchgehend ausgebildet, wodurch sich die Schneidkante 147 kontinuierlich auch über den Übergang zwischen zwei benachbart angeordneten unteren Klingenelementen 148 erstreckt. Beispielsweise sind die oberen Klingenelemente 148 mit dem oberen Messerrücken 144 und die unteren Klingenelemente 148 mit dem unteren Messerrücken 184 baugleich ausgebildet und können gegenseitig ausgetauscht werden.

Zwei Klingenelemente 148 sind jeweils mittels einer oberen Haltevorrichtung 150 mit dem Messerbalken 110 verbunden. Dazwischen sind zwei obere Klingenelemente 148 ohne obere Haltevorrichtung 150 angeordnet. Somit ist jedem dritten oberen Klingenelement 148 eine obere Haltevorrichtung 150 zugeordnet. Dadurch wird eine kontinuierliche Kraftverteilung auf das obere Schneidmesser 140 entlang des Messerbalkens 110 sichergestellt, wodurch der Verschleiss reduziert und die Einsatzdauer der Mähmesservorrichtung 100 erhöht wird.

Die obere Haltevorrichtung 150 ist an dem Messerbalken 110 gelagert. Eine Führungsbuchse (nicht gezeigt) lässt die notwendige Beweglichkeit der oberen Haltevorrichtung 150 gegenüber dem Messerbalken 110 zu, die während des Betriebs der Mähmesservorrichtung 100 durch die Relativbewegung des Doppelmesser-Schneidsystems auftritt. Zusätzlich ist das obere Schneidmesser 140 in einem Schneidmesserlager 142 der oberen Haltevorrichtung 150 geführt.

Zwischen den beiden oberen Haltevorrichtungen 150 befindet sich ein leicht zugänglicher Schraubenkopf 193, welcher mit einer Schraube 192 (nicht gezeigt) verbunden ist. Die Schraube 192 dient dem Fixieren einer unterer Haltevorrichtung 190 an dem Messerbalken 110.

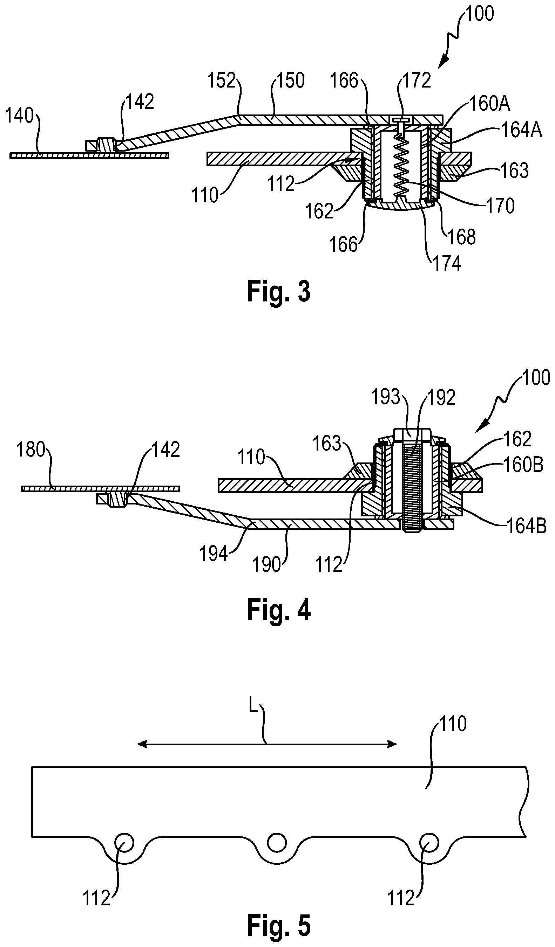

Eine detaillierte Beschreibung der Schraube 192 und der unteren Haltevorrichtung 190 erfolgt in der Beschreibung zu der Figur 4.

Die Figur 3 zeigt eine erfindungsgemässe Mähmesservorrichtung 100 in einer Schnittansicht auf Höhe der oberen Haltevorrichtung 150 nach einer beispielhaften Ausführungsform. Die Mähmesservorrichtung 100 umfasst den Messerbalken 110 und das Doppelmesser-Schneidsystem, wobei das Doppelmesser-Schneidsystem das obere Schneidmesser 140 und das untere Schneidmesser (nicht gezeigt) umfasst. Das obere Schneidmesser 140 ist mittels der oberen Haltevorrichtung 150 mit dem Messerbalken 110 verbunden. Die obere Haltevorrichtung 150 ist hierbei über eine Führungsbuchse 160A an dem Messerbalken 110 gelagert. Die Führungsbuchse 160A ist selbst in einer Gewindebuchse 164A angeordnet, welche wiederum über ein Aussengewinde 162 mit dem Messerbalken 110 verschraubbar ausgebildet ist. Zum Verschrauben der Gewindebuchse 164A wird diese durch die Aufnahme 112 im Messerbalken 110 hindurch geführt. Durch eine Kontermutter 163 ist die Verschraubung der Gewindebuchse 164A zusätzlich abgesichert. Innerhalb der Gewindebuchse 164A befindet sich ein Lager 166, welches die Führungsbuchse 160A nahezu reibungsarm sowohl für eine rotatorische als auch für eine translatorische Bewegung gegenüber der Gewindebuchse 164A lagert. Das Lager 166 ist sowohl an der Oberseite als auch der Unterseite der Gewindebuchse 164A ausgebildet, wodurch verschiedene Lagerfunktionen realisierbar sind. Die rotatorische Lagerungskomponente, welche aufgrund der Bewegung der oberen und der unteren Schneidmesser 140, 180 zueinander erzeugt wird, lässt sich beispielsweise durch den Einsatz eines ringförmigen Wälzlagers aufnehmen. Die translatorische Bewegungskomponente beansprucht die Führungsbuchse 160A in Längsrichtung, weshalb das Anordnen eines Gleitlagers vorteilhaft ist. Ideal ist ein Lager, welches sowohl die rotatorische Belastung als auch die Belastung in Längsrichtung der Führungsbuchse aufnehmen kann.

Innerhalb der Führungsbuchse 160A befindet sich eine vorgespannte Zugfeder 170. Die Zugfeder 170 ist am ersten Ende über eine Federschraube 172 mit der oberen Haltevorrichtung 150 verbunden. Die Zugfeder 170 erstreckt sich durch die Führungsbuchse 160A hindurch und ist an ihrem zweiten Ende mit einem Buchsendeckel 174 verbunden. Der Buchsendeckel 174 umfasst gegenüber der Gewindebuchse 164A einen radialen Überstand 168, wodurch die Zugfeder 170 einerseits unter Zugspannung gesetzt werden kann und andererseits über den Buchsendeckel 174 von außen einstellbar ist.

Durch die Zugspannung der Zugfeder 170 wird die obere Haltevorrichtung 150 an den Messerbalken 110 gezogen. Durch das Anziehen der oberen Haltevorrichtung 150 an den Messerbalken 110 wird eine Anpresskraft des oberen Schneidmessers 140 auf das untere Schneidmesser 180 (nicht gezeigt) bewirkt. Die Führungsbuchse 160A stellt über Ihre Lager 166 innerhalb der Gewindebuchse 164A sicher, dass die Zugfeder 170 ausschliesslich auf Zug beansprucht werden kann. Dadurch wird die Anpresskraft des oberen Schneidmessers 140 auf das untere Schneidmesser 180 nicht durch eine Kippbewegung der oberen Haltevorrichtung 150 erzeugt, sondern durch eine reine Zugbewegung der oberen Haltevorrichtung 150 übertragen. Die Wirkrichtung der Anpresskraft auf das obere Schneidmesser 140 wirkt somit parallel zur Längsrichtung der Führungsbuchse 160A.

Die obere Haltevorrichtung 150 weist zudem eine Kröpfung 152 auf. Die Kröpfung 152 ist zwischen Führungsbuchse 160A und dem oberem Schneidmesser 140 angeordnet, wodurch die Anpresskraft der Zugfeder 170 optimal vom oberen Schneidmessers 140 zum unteren Schneidmesser 180 übertragen werden kann. Die Kröpfung 152 kompensiert somit die räumliche Ausdehnung der Zugfeder 170, welche durch die Orientierung der Führungsbuchse 160A orthogonal zum Messerbalken angeordnet ist. Das obere Schneidmesser 140 ist in dem Schneidmesserlager 142 der oberen Haltevorrichtung 150 geführt.

Die Figur 4 zeigt eine erfindungsgemässe Mähmesservorrichtung 100 in einer Schnittansicht auf Höhe der unteren Haltevorrichtung 190 nach einer beispielhaften Ausführungsform. Im Unterschied zur oberen Haltevorrichtung 150 ist die untere Haltevorrichtung 190 ohne Federelement fest mit dem Messerbalken 110 verbunden. Dies hat insbesondere den Zweck, dass die bereits beschriebene, durch die Zugfeder 170 erzeugte, Anpresskraft des oberen Schneidmessers 140 auf das untere Schneidmesser 180 aufgenommen werden kann.

Die untere Haltevorrichtung 190 ist mittels einer Führungsbuchse 160B an dem Messerbalken 110 fixiert. Die Führungsbuchse 160B liegt hierbei innerhalb einer Gewindebuchse 164B, welche über ein Aussengewinde 162 mit dem Messerbalken 110 verschraubt ist. Zum Verschrauben der Gewindebuchse 164B wird diese durch die Aufnahme 112 im Messerbalken 110 hindurch geführt. Eine zusätzliche Kontermutter 163 sichert die eingeschraubte Gewindebuchse 164B an dem Messerbalken 110 zusätzlich ab. Die Gewindebuchse 164B kann somit ohne gesteigerten Montageaufwand demontiert oder gewechselt werden. Zusätzlich kann mittels des Aussengewindes 162 der Gewindebuchse 164B die absolute Position der Gewindebuchse 164B relativ zum Messerbalken 110 verändern werden. Dies ermöglicht eine präzise Einstellung der unteren Haltevorrichtung 190 in Abstimmung mit der oberen Haltevorrichtung 150.

Zusätzlich weist die untere Haltevorrichtung 190 eine Schraube 192 auf, welche sich vollständig durch die Führungsbuchse 160B hindurch erstreckt und die untere Haltevorrichtung 190 an dem Messerbalken 110 fixiert. Die Schraube 192 verfügt über einen leicht zugänglichen Schraubenkopf 193, über welchen die Fixierung oder das Lösen der unteren Haltevorrichtung 190 mit dem Messerbalken 110 einfach erfolgen kann. Zusätzlich wird durch das Hindurchführen der Schraube 192 durch die vollständige Führungsbuchse 160B hindurch eine symmetrische Krafteinleitung realisiert.

Des Weiteren weist die untere Haltevorrichtung 190 eine Kröpfung 194 auf. Die Kröpfung 194 ist zwischen Führungsbuchse 160B und dem unteren Schneidmesser 180 angeordnet. Das untere Schneidmesser 180 ist in einem Schneidmesserlager 142 der unteren Haltevorrichtung 190 geführt.

Die Figur 5 zeigt einen Messerbalken 110 einer erfindungsgemässen Mähmesservorrichtung 100 nach einer beispielhaften Ausführungsform. Entlang einer Längsrichtung L des Messerbalkens 110 wird das obere Schneidmesser 140 (nicht gezeigt) und das untere Schneidmesser 180 (nicht gezeigt) angeordnet. Hierbei weist der Messerbalken 110 eine Vielzahl von Aufnahmen 112 auf, welche zum Anordnen von oberen Haltevorrichtung 150 und unteren Haltevorrichtungen 190 ausgebildet sind.

## Patentansprüche

1. Mähmesservorrichtung (100) mit:
einem Messerbalken (110), und
einem Doppelmesser-Schneidsystem, wobei das Doppelmesser-Schneidsystem ein oberes Schneidmesser (140) und ein unteres Schneidmesser (180) umfasst, welche relativ zueinander bewegbar ausgebildet sind, wobei
das obere Schneidmesser (140) mittels einer oberen Haltevorrichtung (150) und das untere Schneidmesser (180) mittels einer unteren Haltevorrichtung (190) mit dem Messerbalken (110) verbunden ausgebildet sind, wobei
die obere Haltevorrichtung (150) mittels einer Führungsbuchse (160A) an dem Messerbalken (110) gelagert ist,
**dadurch gekennzeichnet, dass**
innerhalb der Führungsbuchse (160A) eine
vorgespannte Zugfeder (170) angeordnet ist, wobei die Zugkraft der Zugfeder (170) dazu ausgebildet ist, über die obere Haltevorrichtung (150) eine Anpresskraft des oberen Schneidmessers (140) auf das untere Schneidmesser (180) zu bewirken.

2. Mähmesservorrichtung (100) nach Anspruch 1, **dadurch gekennzeichnet, dass** die Führungsbuchse (160A) in einer Gewindebuchse (164A) gehalten ist.

3. Mähmesservorrichtung (100) nach Anspruch 2, **dadurch gekennzeichnet, dass** die Gewindebuchse (164A) über ein Aussengewinde (162) mit dem Messerbalken (110) verschraubbar ausgebildet ist.

4. Mähmesservorrichtung (100) nach einem der voranstehenden Ansprüche, **dadurch gekennzeichnet, dass** die Führungsbuchse (160A) über ein Lager (166) in der Gewindebuchse (164A) gehalten ist.

5. Mähmesservorrichtung (100) nach Anspruch 4, **dadurch gekennzeichnet, dass** das Lager (166) an einer Oberseite und einer Unterseite der Gewindebuchse (164A) ausgebildet ist.

6. Mähmesservorrichtung (100) nach einem der voranstehenden Ansprüche, **dadurch gekennzeichnet, dass** die Zugfeder (170) mittels einer Federschraube (172) spannbar ausgebildet ist.

7. Mähmesservorrichtung (100) nach Anspruch 6, **dadurch gekennzeichnet, dass** die Federschraube (172) über einen Buchsendeckel (174) von außen einstellbar ausgebildet ist.

8. Mähmesservorrichtung (100) nach Anspruch 7, **dadurch gekennzeichnet, dass** der Buchsendeckel (174) gegenüber der Gewindebuchse (164A) einen radialen Überstand (168) aufweist.

9. Mähmesservorrichtung (100) nach einem der voranstehenden Ansprüche, **dadurch gekennzeichnet, dass** die obere Haltevorrichtung (150) eine Kröpfung (152) aufweist, welche zwischen Führungsbuchse (160A) und oberem Schneidmesser (140) angeordnet ist.

10. Mähmesservorrichtung (100) nach einem der voranstehenden Ansprüche, **dadurch gekennzeichnet, dass** das obere Schneidmesser (140) in einem Schneidmesserlager (142) der oberen Haltevorrichtung (150) geführt ist.

11. Mähmesservorrichtung (100) nach einem der voranstehenden Ansprüche, **dadurch gekennzeichnet, dass** die untere Haltevorrichtung (190) mittels einer Führungsbuchse (160B) an dem Messerbalken (110) gelagert ist

12. Mähmesservorrichtung (100) nach Anspruch 11, **dadurch gekennzeichnet, dass** die Führungsbuchse (160B) in einer Gewindebuchse (164B) gehalten ist.

13. Mähmesservorrichtung (100) nach Anspruch 12, **dadurch gekennzeichnet, dass** die Gewindebuchse (164B) über ein Aussengewinde (162) mit dem Messerbalken (110) verschraubbar ausgebildet ist.

14. Mähmesservorrichtung (100) nach einem der Ansprüche 11 bis 13, **dadurch gekennzeichnet, dass** die untere Haltevorrichtung (190) mittels einer Schraube (192) mit Messerbalken (110) verschraubbar ist, wobei sich die Schraube (192) vollständig durch die Führungsbuchse (164B) hindurch erstreckt.

15. Mähmesservorrichtung (100) nach einem der voranstehenden Ansprüche, **dadurch gekennzeichnet, dass** das obere Schneidmesser (140) eine Vielzahl von Klingenelementen (148) umfasst, wobei jedem dritten Klingenelement (148) eine obere Haltevorrichtung (150) zugeordnet ist.

## Claims

1. Mowing knife device (100) with:
a knife bar (110), and
a double knife cutting system, wherein the double knife cutting system comprises an upper cutting knife (140) and a lower cutting knife (180) which are configured to be movable relative to each other, wherein
the upper cutting knife (140) is connected to the knife bar (110) via an upper holding device (150) and the lower cutting knife (180) is connected to the knife bar (110) via a lower holding device (190), wherein
the upper holding device (150) is mounted on the cutter bar (110) via a guide bush (160A),
**characterised in that**
a preloaded tension spring (170) is arranged within the guide bush (160A), wherein the tension force of the tension spring (170) is configured to cause a pressing force of the upper cutting knife (140) on the lower cutting knife (180) via the upper holding device (150).

2. Mowing knife device (100) according to claim 1, **characterised in that** the guide bush (160A) is held in a threaded bush (164A).

3. Mowing knife device (100) according to claim 2, **characterised in that** the threaded bush (164A) is configured to be screwed to the knife bar (110) via an external thread (162).

4. Mowing knife device (100) according to one of the preceding claims, **characterised in that** the guide bush (160A) is held in the threaded bush (164A) by a bearing (166).

5. Mowing knife device (100) according to claim 4, **characterised in that** the bearing (166) is formed on an upper side and a lower side of the threaded bush (164A).

6. Mowing knife device (100) according to one of the preceding claims, **characterised in that** the tension spring (170) is configured to be tensionable via a spring screw (172).

7. Mowing knife device (100) according to claim 6, **characterised in that** the spring screw (172) is configured to be adjustable from the outside by a bushing cover (174).

8. Mowing knife device (100) according to claim 7, **characterised in that** the bushing cover (174) comprises a radial projection (168) opposite to the threaded bush (164A).

9. Mowing knife device (100) according to one of the preceding claims, **characterised in that** the upper holding device (150) comprises a bend (152) which is arranged between the guide bush (160A) and the upper cutting knife (140).

10. Mowing knife device (100) according to one of the preceding claims, **characterised in that** the upper cutting knife (140) is guided in a cutting knife bearing (142) of the upper holding device (150).

11. Mowing knife device (100) according to one of the preceding claims, **characterised in that** the lower holding device (190) is mounted on the knife bar (110) via a guide bush (160B).

12. Mowing knife device (100) according to claim 11, **characterised in that** the guide bush (160B) is held in a threaded bush (164B).

13. Mowing knife device (100) according to claim 12, **characterised in that** the threaded bush (164B) is configured to be screwed to the knife bar (110) via an external thread (162).

14. Mowing knife device (100) according to one of the claims 11 to 13, **characterised in that** the lower holding device (190) is screwable to the knife bar (110) via a screw (192), wherein the screw (192) extends completely through the guide bush (164B).

15. Mowing knife device (100) according to one of the preceding claims, **characterised in that** the upper cutting knife (140) comprises a plurality of blade elements (148), wherein each third blade element (148) is associated with an upper holding device (150).

## Revendications

1. Dispositif à lames de fauchage (100) comprenant :
une barre de coupe (110), et
un système de coupe à double lame, le système de coupe à double lame comprenant une lame de coupe supérieure (140) et une lame de coupe inférieure (180) qui sont configurées pour être mobiles l'une par rapport à l'autre,
la lame de coupe supérieure (140) étant configurée pour être reliée à la barre de coupe (110) au moyen d'un dispositif de retenue supérieur (150) et la lame de coupe inférieure (180) étant configurée pour être reliée à la barre de coupe (110) au moyen d'un dispositif de retenue inférieur (190),
le dispositif de retenue supérieur (150) étant monté sur la barre de coupe (110) au moyen d'une douille de guidage (160A),
**caractérisé en ce que**
un ressort de traction précontraint (170) est agencé à l'intérieur de la douille de guidage (160A), la force de traction du ressort de traction (170) étant configurée pour provoquer une force de pression de la lame de coupe supérieure (140) sur la lame de coupe inférieure (180) par l'intermédiaire du dispositif de retenue supérieur (150) .

2. Dispositif à lames de fauchage (100) selon la revendication 1, **caractérisé en ce que** la douille de guidage (160A) est maintenue dans une douille filetée (164A).

3. Dispositif à lames de fauchage (100) selon la revendication 2, **caractérisé en ce que** la douille filetée (164A) est configurée pour pouvoir être vissée à la barre de coupe (110) par l'intermédiaire d'un filetage extérieur (162).

4. Dispositif à lames de fauchage (100) selon l'une quelconque des revendications précédentes, **caractérisé en ce que** la douille de guidage (160A) est maintenue dans la douille filetée (164A) par l'intermédiaire d'un palier (166) .

5. Dispositif à lames de fauchage (100) selon la revendication 4, **caractérisé en ce que** le palier (166) est formé sur un côté supérieur et un côté inférieur de la douille filetée (164A).

6. Dispositif à lames de fauchage (100) selon l'une quelconque des revendications précédentes, **caractérisé en ce que** le ressort de traction (170) est configuré pour pouvoir être tendu au moyen d'une vis à ressort (172).

7. Dispositif à lames de fauchage (100) selon la revendication 6, **caractérisé en ce que** la vis à ressort (172) est configurée pour être réglable de l'extérieur par l'intermédiaire d'un couvercle de douille (174).

8. Dispositif à lames de fauchage (100) selon la revendication 7, **caractérisé en ce que** le couvercle de douille (174) présente une saillie radiale (168) par rapport à la douille filetée (164A).

9. Dispositif à lames de fauchage (100) selon l'une quelconque des revendications précédentes, **caractérisé en ce que** le dispositif de retenue supérieur (150) présente un coude (152) qui est agencé entre la douille de guidage (160A) et la lame de coupe supérieure (140).

10. Dispositif à lames de fauchage (100) selon l'une quelconque des revendications précédentes, **caractérisé en ce que** la lame de coupe supérieure (140) est guidée dans un palier de lame de coupe (142) du dispositif de retenue supérieur (150).

11. Dispositif à lames de fauchage (100) selon l'une quelconque des revendications précédentes, **caractérisé en ce que** le dispositif de retenue inférieur (190) est monté sur la barre de coupe (110) au moyen d'une douille de guidage (160B).

12. Dispositif à lames de fauchage (100) selon la revendication 11, **caractérisé en ce que** la douille de guidage (160B) est maintenue dans une douille filetée (164B).

13. Dispositif à lames de fauchage (100) selon la revendication 12, **caractérisé en ce que** la douille filetée (164B) est configurée pour pouvoir être vissée à la barre de coupe (110) par l'intermédiaire d'un filetage extérieur (162).

14. Dispositif à lames de fauchage (100) selon l'une quelconque des revendications 11 à 13, **caractérisé en ce que** le dispositif de retenue inférieur (190) peut être vissé à la barre de coupe (110) au moyen d'une vis (192), la vis (192) s'étendant entièrement à travers la douille de guidage (164B).

15. Dispositif à lames de fauchage (100) selon l'une quelconque des revendications précédentes, **caractérisé en ce que** la lame de coupe supérieure (140) comprend une pluralité d'éléments de lame (148), un dispositif de retenue supérieur (150) étant associé à chaque troisième élément de lame (148).
